# EUROPÄISCHE PATENTANMELDUNG

(11) **EP 2 295 281 A1**
(43) Veröffentlichungstag der Anmeldung: **16.03.2011**
(21) Anmeldenummer: 10009310.3
(22) Anmeldetag: 08.09.2010
(51) Int. Cl.: B60L 11/18, B62D 1/00, B62D 1/28, B62D 5/04, B62D 15/02, G05D 1/00

(54) **Fahrerassistenzeinrichtung für ein Kraftfahrzeug und Verfahren zum Unterstützen eines Fahrers beim Überwachen eines autonomen Parkvorgangs eines Karftfahrzeugs**

(30) Priorität: 15.09.2009 DE 102009041587
(71) Anmelder: Valeo Schalter und Sensoren GmbH, 74321 Bietigheim-Bissingen (DE)
(72) Erfinder: Mathes, Joachim, 74080 Heilbronn (DE)

(57) **Zusammenfassung**

Es soll eine Fahrerassistenzeinrichtung geschaffen werden, mit welcher der Fahrer eines Kraftfahrzeugs (1) eine Gefahrsituation während eines autonomen Parkvorgangs des Kraftfahrzeugs (1) einfach erkennen kann. Es wird eine Fahrerassistenzeinrichtung bereitgestellt, deren Steuereinrichtung (2) dazu ausgelegt ist, Steuersignale an eine Antriebs- oder Lenkvorrichtung (5) des Kraftfahrzeugs (1) auszugeben, die ein Durchführen eines autonomen Parkvorgangs veranlassen. Die Steuereinrichtung (2) ist auch dazu ausgelegt, Befehle von einer Fernbedienung (10) zu empfangen und nach Empfangen eines vorbestimmten Unterbrechungsbefehls (B) einen bereits begonnenen Parkvorgang des Kraftfahrzeugs (1) zu unterbrechen. Zumindest eine Kamera (7a bis 7h) ist mit der Steuereinrichtung (2) gekoppelt und gewinnt Bilddaten über einen Umgebungsbereich (21 a bis 21 h) des Kraftfahrzeugs (1). Die Steuereinrichtung (2) sendet Signale (17) an die Fernbedienung (10), die die durch die Kamera (7a bis 7h) gewonnenen Bilddaten oder daraus berechnete Bilddaten umfassen.

## Beschreibung

Die Erfindung betrifft eine Fahrerassistenzeinrichtung für ein Kraftfahrzeug, die eine Steuereinrichtung umfasst. Die Steuereinrichtung kann Steuersignale an eine Antriebs- und/oder Lenkvorrichtung des Kraftfahrzeugs ausgeben, die ein Durchführen eines autonomen Parkvorgangs des Kraftfahrzeugs veranlassen. Die Steuereinrichtung kann auch Befehle von einer Fernbedienung empfangen und nach Empfangen eines vorbestimmten Unterbrechungsbefehls einen bereits begonnenen Parkvorgang des Kraftfahrzeugs unterbrechen. Die Erfindung betrifft auch ein Kraftfahrzeug mit einer solchen Fahrerassistenzeinrichtung. Die Erfindung bezieht sich des Weiteren auf ein Verfahren zum Unterstützen eines Fahrers beim Überwachen eines autonomen Parkvorgangs eines Kraftfahrzeugs, welcher durch eine Steuereinrichtung einer Fahrerassistenzeinrichtung unter Ausgabe von Steuersignalen an eine Antriebs- und/oder Lenkvorrichtung des Kraftfahrzeugs durchgeführt wird.

Es ist Stand der Technik, Kraftfahrzeuge mit einer solchen Fahrerassistenzeinrichtung auszustatten, die zum Durchführen eines autonomen bzw. automatischen Parkvorgangs geeignet ist. Eine solche Fahrerassistenzeinrichtung ist z.B. aus der Druckschrift DE 198 17 142 B4 bekannt. Bei derartigen Fahrerassistenzeinrichtungen hat der Fahrer jederzeit die Möglichkeit, den autonomen Parkvorgang zu unterbrechen, nämlich mit Hilfe einer Fernbedienung, die z.B. in Form eines Fahrzeugschlüssels bereitgestellt ist.

Aus der Druckschrift EP 1 658 211 B1 ist ein Nutzfahrzeug bekannt, welches ein Rangierhilfesystem umfasst. Mit dem Rangierhilfesystem kann das Nutzfahrzeug in eine durch den Fahrer vorgegebene Soll-Position gebracht werden. Die Vorgabe der Soll-Position für das Nutzfahrzeug erfolgt mit Hilfe einer Fernbedienung, die auch einen Bildschirm umfasst. An dem Bildschirm werden die jeweils aktuelle Position sowie die Soll-Position des Nutzfahrzeugs angezeigt, wie auch die Umgebung des Nutzfahrzeugs. Die Daten betreffend die Umgebung werden mit Hilfe von Abstandssensoren gewonnen, wie beispielsweise mit Hilfe von Ultraschallsensoren. Am Heck des Nutzfahrzeugs ist außerdem eine Kamera angebracht.

Aus der Druckschrift EP 1 249 379 B1 ist ein Kraftfahrzeug bekannt, bei welchem ein selbsttätiger Park- oder Rangiervorgang mittels einer Sendeeinrichtung gestartet und unterbrochen werden kann. Der selbsttätige Park- oder Rangiervorgang bleibt dabei nur dann aufrechterhalten, solange der Fahrer Kontakt mit dem Fahrzeug hält, z.B. durch Drücken einer Park- oder Rangiertaste an der Sendeeinrichtung. Wird die Taste freigegeben, so wird der Park- oder Rangiervorgang sofort unterbrochen, und das Fahrzeug wird selbsttätig gestoppt. Die Sendeeinrichtung kann z.B. in den Fahrzeugschlüssel oder in ein Mobiltelefon integriert sein.

Bei den autonomen bzw. vollständig automatischen Parkhilfesystemen wird zunächst eine Parklücke - sei diese eine Quer- oder Längsparklücke - erkannt; dann wird eine Parkbahn bzw. Trajektorie durch das Parkhilfesystem berechnet, welche durch das Kraftfahrzeug zum Erreichen der Zielposition in der erkannten Parklücke befahren werden soll. Der tatsächliche Parkvorgang soll dabei durch den Fahrer freigegeben werden, das heißt der Parkvorgang wird erst dann gestartet, wenn der Fahrer einen entsprechenden Befehl erzeugt, nämlich beispielsweise mit Hilfe einer Fernbedienung. Das Kraftfahrzeug fährt dann mit Schrittgeschwindigkeit in die Parklücke autonom. Zwar kann der Fahrer den Parkvorgang mit Hilfe der Fernbedienung jederzeit unterbrechen, prinzipbedingt kann der Fahrer die auf der ihm abgewandten Seite des Kraftfahrzeugs befindlichen Gegenstände oder Personen nicht sehen. Befindet sich ein Gegenstand in der Parkbahn des Kraftfahrzeugs und wird das Kraftfahrzeug nicht automatisch abgebremst, so ist eine Kollision das Ergebnis. Es ist somit eine besondere Herausforderung, den Fahrer beim Überwachen bzw. beim Unterbrechen eines automatischen Parkvorgangs besser zu unterstützen, da es eine Reihe von Gefahrquellen gibt, die von der heute bekannten Geschwindigkeit zuverlässig erkannt werden können, z. B. ein fehlender Kanaldeckel.

Es ist Aufgabe der vorliegenden Erfindung, eine Lösung aufzuzeigen, wie ein Fahrer beim Überwachen eines autonomen Parkvorgangs besonders zuverlässig unterstützt werden kann.

Diese Aufgabe wird erfindungsgemäß durch eine Fahrerassistenzeinrichtung mit den Merkmalen des Patentanspruchs 1, durch ein Kraftfahrzeug mit den Merkmalen gemäß Patentanspruch 8, durch eine Fernbedienung mit den Merkmalen des Patentanspruchs 11, wie auch durch ein Verfahren mit den Merkmalen gemäß Patentanspruch 13 gelöst. Vorteilhafte Ausführungen der Erfindung sind Gegenstand der abhängigen Patentansprüche.

Eine erfindungsgemäße Fahrerassistenzeinrichtung für ein Kraftfahrzeug umfasst eine Steuereinrichtung, die dazu ausgelegt ist, Steuersignale an eine Antriebs- oder Lenkvorrichtung des Kraftfahrzeugs auszugeben. Die Steuersignale veranlassen dann ein Durchführen eines autonomen bzw. vollständig automatischen Parkvorgangs des Kraftfahrzeugs. Die Steuereinrichtung ist auch dazu ausgelegt, Befehle von einer Fernbedienung zu empfangen und nach Empfangen eines vorbestimmten Unterbrechungsbefehls einen bereits begonnenen Parkvorgang des Kraftfahrzeugs zu unterbrechen. Die Fahrerassistenzeinrichtung umfasst zumindest eine mit der Steuereinrichtung gekoppelte Kamera zum Gewinnen von Bilddaten über einen Umgebungsbereich des Kraftfahrzeugs. Die Steuereinrichtung ist dazu ausgelegt, Signale an die Fernbedienung zu senden, die die durch die Kamera gewonnenen Bilddaten und/oder daraus berechnete Bilddaten umfassen. Diese Signale können eine Anzeigeeinrichtung der Fernbedienung dazu veranlassen, Bilder anzuzeigen, die auf den Bilddaten beruhen.

Also wird der Fahrer durch die erfindungsgemäße Fahrerassistenzeinrichtung beim Überwachen eines autonomen Parkvorgangs des Kraftfahrzeugs dahingehend unterstützt, dass er an einer Anzeigeeinrichtung der tragbaren bzw. mobilen Fernbedienung Bilder über einen Umgebungsbereich des Kraftfahrzeugs angezeigt bekommt. Der Fahrer kann somit alle im Umgebungsbereich des Kraftfahrzeugs befindlichen Objekte sehen und den autonomen Parkvorgang gegebenenfalls dann unterbrechen, wenn eine Gefahrsituation entsteht.

Unter einer Kamera wird hier insbesondere eine Videokamera bzw. eine Bilderfassungseinrichtung verstanden, die Licht in dem durch den Menschen wahrnehmbaren bzw. sichtbaren Spektralbereich detektieren und so Bilder aufzeichnen kann.

Die durch die Steuereinrichtung gesandten und die Bilddaten umfassenden Signale können derart codiert und moduliert sein, dass sie durch ein Mobiltelefon empfangen werden können. Dann können die durch die Kamera aufgezeichneten Bilder an einem Mobiltelefon des Fahrers angezeigt werden, und der Fahrer kann den Umgebungsbereich des Kraftfahrzeugs direkt am Mobiltelefon sehen. Es kann auch vorgesehen sein, dass die Steuereinrichtung den Unterbrechungsbefehl von einem Mobiltelefon empfangen kann. Dann kann der Fahrer mit Hilfe seines Mobiltelefons sich nicht nur die Bilder über den Umgebungsbereich des Kraftfahrzeugs ansehen, sondern er kann außerdem den Parkvorgang des Kraftfahrzeugs mit dem Mobiltelefon unterbrechen. Also kann in einer Ausführungsform vorgesehen sein, dass die Steuereinrichtung dazu ausgelegt ist, den Unterbrechungsbefehl von einem Mobiltelefon zu empfangen und nach Empfangen des Unterbrechungsbefehls einen bereits begonnenen Parkvorgang des Kraftfahrzeugs zu unterbrechen.

Es hat sich als besonders vorteilhaft herausgestellt, wenn die Fahrerassistenzeinrichtung selbst eine tragbare Fernbedienung umfasst. Die Fernbedienung weist bevorzugt ein Bedienelement zum Erzeugen des Unterbrechungsbefehls auf. Die Fernbedienung kann außerdem eine Anzeigeeinrichtung umfassen, die Bilddaten von der Steuereinrichtung empfangen kann. Mit der Anzeigeeinrichtung können dann Bilder angezeigt werden, die auf den empfangenen Bilddaten beruhen. Die Fernbedienung kann z.B. in einen Fahrzeugschlüssel integriert sein oder sie kann eine vom Fahrzeugschlüssel separate bzw. getrennte Fernbedienung sein. Diese Ausführungsform hat den Vorteil, dass der Fahrer kein Mobiltelefon benötigt, um sich die Bilder über den Umgebungsbereich des Kraftfahrzeugs während dessen Parkvorgangs anzuschauen. Er kann sich mit der vorhandenen Fernbedienung neben das Kraftfahrzeug stellen und den Parkvorgang an der Fernbedienung beobachten.

Die zumindest eine Kamera gewinnt die Bilddaten über den Umgebungsbereich des Kraftfahrzeugs insbesondere kontinuierlich während einer gesamten Zeitdauer eines Parkvorgangs. Auch die Steuereinrichtung sendet die Signale mit den Bilddaten insbesondere kontinuierlich an die Fernbedienung. Der Fahrer erhält somit ein kontinuierliches Bild über den Umgebungsbereich des Kraftfahrzeugs und kann somit jegliche im Umgebungsbereich des Kraftfahrzeugs befindliche Objekte erkennen und den autonomen Parkvorgang jederzeit unterbrechen.

Besonders bevorzugt umfasst die Fahrerassistenzeinrichtung zumindest zwei, noch bevorzugter zumindest drei, insbesondere zumindest vier, mit der Steuereinrichtung gekoppelte Kameras jeweils zum Gewinnen von Bilddaten über einen Umgebungsbereich des Kraftfahrzeugs. Die Fahrerassistenzeinrichtung umfasst bevorzugt eine Erfassungseinrichtung zum Ermitteln einer Position der Fernbedienung relativ zum Kraftfahrzeug. Dann kann die Steuereinrichtung abhängig von der jeweils aktuellen Position der Fernbedienung relativ zum Kraftfahrzeug zumindest einen Bereich aus einem von den zumindest zwei Kameras erfassbaren Gesamtumgebungsbereich auswählen und Signale an die Fernbedienung senden, die Bilddaten über den ausgewählten Bereich umfassen. Bei dieser Ausführungsform wird also der dem Fahrer an der Fernbedienung angezeigte Umgebungsbereich des Kraftfahrzeugs abhängig von der jeweils augenblicklichen Position des Fahrers ausgesucht. Der Fahrer bekommt somit jederzeit Bilder über einen solchen Umgebungsbereich des Kraftfahrzeugs angezeigt, welcher aus der Sicht des Fahrers jeweils optimal ist.

Bevorzugt wird durch die Steuereinrichtung ein solcher Bereich aus dem von den zumindest zwei Kameras erfassbaren Gesamtumgebungsbereich des Kraftfahrzeugs ausgewählt, der von der Fernbedienung und somit vom Fahrer selbst abgewandt ist. Der Fahrer bekommt somit Bilder über einen solchen Umgebungsbereich an der Fernbedienung angezeigt, den er selbst aufgrund der Position des Kraftfahrzeugs nicht sehen kann. Aus der Sicht des Fahrers nicht einsehbare bzw. dem Fahrer bezüglich des Kraftfahrzeugs gegenüber liegende Seite der Fahrzeugumgebung kann demnach durch die Fahrerassistenzeinrichtung erfasst und an der Fernbedienung angezeigt werden. Diese Ausführungsform hat - insbesondere dann, wenn der Fahrer den Parkvorgang von außerhalb des Kraftfahrzeugs überwacht - außerdem den Vorteil, dass sich der Fahrer jede Seite des Kraftfahrzeugs ansehen kann, ohne die selbst angenommene eigene Position ändern zu müssen bzw. ohne sich selbst aus der einmal angenommenen Position bewegen zu müssen. Er kann sich einmal in eine für ihn optimale Position hinstellen und aus dieser Position jegliche Gefahrsituationen erkennen.

In einer Ausführungsform, in welcher zumindest zwei Kameras Bilddaten über jeweils einen Umgebungsbereich des Kraftfahrzeugs gewinnen, kann vorgesehen sein, dass die Steuereinrichtung abwechseln die Bilddaten der zumindest zwei Kameras an die Fernbedienung übermittelt. Dies bedeutet, dass zu einem ersten Zeitpunkt Bilddaten von einer Kamera und zu einem anderen Zeitpunkt Bilddaten von einer anderen Kamera an die Fernbedienung übermittelt werden. Insbesondere erfolgt dieses Umschalten zwischen Bilddaten unterschiedlicher Kameras periodisch, das heißt mit einer bestimmten Frequenz, wie zum Beispiel mit einer Frequenz von 0,5 Hz bis 1 Hz. Dann wechselt das an der Fernbedienung angezeigte Bild in zeitlichen Abständen von 1 s bis 2 s. Der Fahrer kann sich dann zum Beispiel über die gesamte Umgebung des Kraftfahrzeugs informieren. Also bekommt der Fahrer an der Fernbedienung bei dieser Ausführungsform unterschiedliche Bereiche der gesamten Umgebung des Kraftfahrzeugs angezeigt, die abwechselnd abgebildet werden.

In einer Ausführungsform, in welcher zumindest zwei Kameras Bilddaten über jeweils einen Umgebungsbereich des Kraftfahrzeugs gewinnen, kann vorgesehen sein, dass die Steuereinrichtung eine Eingabe von der Fernbedienung empfängt, über welche eine Kamera aus den zumindest zwei Kameras ausgewählt wird. Dann kann die Steuereinrichtung Bilddaten der ausgewählten Kamera an die Fernbedienung übermitteln. Dies bedeutet, dass der Fahrer selbst eine Kamera aus den zumindest zwei Kameras auswählen kann, nämlich mit Hilfe der Fernbedienung. Dann sendet die Fernbedienung Signale an die Steuereinrichtung, die Daten über die ausgewählte Kamera umfassen. Die Steuereinrichtung empfängt also eine durch den Fahrer an der Fernbedienung vorgenommene Eingabe und übermittelt dann nur Bilddaten der durch den Fahrer ausgewählten Kamera an die Fernbedienung. Also bekommt der Fahrer bei dieser Ausführungsform an der Fernbedienung Bilder von derjenigen Kamera angezeigt, die er selbst mittels der Fernbedienung ausgewählt hat. Eine solche Vorgehensweise ist besonders benutzerfreundlich, denn der Fahrer kann selbst entscheiden, welcher Umgebungsbereich des Kraftfahrzeugs ihm an der Fernbedienung angezeigt werden soll. Kann der Fahrer einen Umgebungsbereich des Kraftfahrzeugs nicht sehen, so kann er eine solche Kamera auswählen, die gerade diesen durch den Fahrer nicht einsehbaren Bereich abbildet.

Die von der Steuereinrichtung an die Fernbedienung gesandten Signale beinhalten die durch die zumindest eine Kamera gewonnenen Bilddaten und/oder sie beinhalten daraus berechnete Bilddaten, das heißt solche Daten, die durch Verarbeitung der aufgenommenen Bilddaten gewonnen werden. Zum Beispiel kann die Steuereinrichtung durch Verarbeitung der von der zumindest einen Kamera gewonnen Bilddaten solche Bilddaten für die Fernbedienung berechnen, die eine Darstellung einer Draufsicht auf das Kraftfahrzeug und zumindest einen Umgebungsbereich beinhalten. Der Umgebungsbereich des Kraftfahrzeugs, insbesondere ein durch den Fahrer nicht einsehbarer Umgebungsbereich des Kraftfahrzeugs, kann also dem Fahrer an der Fernbedienung aus einer Vogelperspektive angezeigt werden. Eine solche Draufsicht auf das Kraftfahrzeug und zumindest einen Umgebungsbereich ist besonders benutzerfreundlich, der Fahrer kann somit besonders einfach auf die Abstände zwischen dem Kraftfahrzeug und den im Umgebungsbereich befindlichen Objekten zurückschließen bzw. eine kritische Situation erkennen und den Parkvorgang gegebenenfalls unterbrechen.

Es kann vorliegend demnach zwischen zwei Aspekten unterschieden werden. Zum einen können - wie bereits ausgeführt - die gewonnenen Bilddaten ohne Verarbeitung und/oder nach einer Bildverarbeitung an die Fernbedienung übermittelt werden. Zum anderen können an die Fernbedienung Bilddaten betreffend unterschiedliche Umgebungsbereiche des Kraftfahrzeugs übermittelt werden. Umfasst die Fahrerassistenzeinrichtung zumindest zwei Kameras jeweils zum Gewinnen von Bilddaten über einen Umgebungsbereich des Kraftfahrzeugs, so können Bilddaten lediglich einer einzelnen Kamera und/oder Bilddaten über einen ausgewählten Bereich eines durch eine einzelne Kamera erfassten Umgebungsbereichs und/oder Bilddaten über einen ausgewählten Bereich eines durch die zumindest zwei Kameras erfassten Gesamterfassungsbereichs und/oder Bilddaten über den Gesamtumgebungsbereich an die Fernbedienung übermittelt werden.

Wie bereits ausgeführt, können die durch die Steuereinrichtung gesendeten Signale mobilfunkkonform, also nach einem Mobilfunk-Standard codiert und moduliert werden. Zusätzlich oder alternativ kann die Fahrerassistenzeinrichtung selbst eine Fernbedienung umfassen, und die Steuereinrichtung kann die Signale gemäß einem anderen Standard erzeugen. Zum Beispiel kann hier ein Standard der IEEE-802.11-Familie (Wireless Lokal Area Network) und/oder ein Standard der IEEE-802.15-Familie (Bluetooth) vorgesehen sein. Zusätzlich oder alternativ können die Bilddaten auch mit Hilfe einer Infrarot-Datenübertragung an die Fernbedienung gesendet werden. Ist die Fernbedienung in einen Fahrzeugschlüssel integriert, so kann auch ein bereits für die Übertragung von Code-Daten zwischen dem Kraftfahrzeug und dem Fahrzeugschlüssel verwendeter RF(Radio Frequency)-Standard für die Übertragung von Bilddaten genutzt werden.

Die Erfindung umfasst auch ein Kraftfahrzeug, welches eine erfindungsgemäße Fahrerassistenzeinrichtung oder eine bevorzugte Ausgestaltung derselben aufweist. Die mit Bezug auf die erfindungsgemäße Fahrerassistenzeinrichtung vorgestellten bevorzugten Ausführungsformen und deren Vorteile gelten entsprechend für das erfindungsgemäße Kraftfahrzeug.

Bei dem Kraftfahrzeug kann vorgesehen sein, dass jeweils zumindest eine Kamera an einer jeden Seite des Kraftfahrzeugs angeordnet ist; das heißt zumindest eine Kamera an einer Fahrzeugfront, zum Beispiel an einem vorderen Stoßfänger, zumindest eine Kamera am Fahrzeugheck, zum Beispiel an einem hinteren Stoßfänger, zumindest eine Kamera auf der linken Seite, zum Beispiel an einem linken Außenspiegel, sowie zumindest eine Kamera auf der rechten Seite, zum Beispiel an einem rechten Außenspiegel. Mit einer solchen Anordnung von Kameras kann eine gesamte Umgebung des Kraftfahrzeugs erfasst werden, es kann ein vollständiges 360°-Bild gewonnen werden, und zumindest ein Teil davon kann dem Fahrer an der Fernbedienung angezeigt werden. Mit einer solchen Anordnung von Kameras ist außerdem möglich, die Darstellung einer Draufsicht auf das Kraftfahrzeug sowie seine Umgebung zu erzeugen.

Eine erfindungsgemäße Fernbedienung für eine Fahrerassistenzeinrichtung umfasst eine Sende- und Empfangseinrichtung zum Senden und Empfangen von Signalen. Die Fernbedienung umfasst ein Bedienelement, mittels welchem ein Unterbrechungsbefehl an eine Steuereinrichtung der Fahrerassistenzeinrichtung erzeugbar ist, welcher ein Unterbrechen eines autonomen Parkvorgangs eines die Fahrerassistenzeinrichtung aufweisenden Kraftfahrzeugs bewirkt. Die Sende- und Empfangseinrichtung sendet dann Signale mit dem Unterbrechungsbefehl an die Steuereinrichtung der Fahrerassistenzeinrichtung. Die Fernbedienung umfasst außerdem eine Anzeigeeinrichtung, die dazu ausgebildet ist, mittels einer Kamera der Fahrerassistenzeinrichtung erzeugte Bilddaten von der Steuereinrichtung der Fahrerassistenzeinrichtung zu empfangen und Bilder anzuzeigen, die auf den Bilddaten beruhen.

Insbesondere ist die erfindungsgemäße Fernbedienung eine tragbare bzw. mobile Fernbedienung, das heißt eine solche, die der Fahrer eines Kraftfahrzeugs selbst außerhalb und innerhalb des Kraftfahrzeugs tragen kann.

Durch die erfindungsgemäße Fernbedienung wird es für den Fahrer möglich, die Umgebung eines Kraftfahrzeugs während eines autonomen Parkvorgangs zu überwachen, auch dann, wenn die Umgebung des Kraftfahrzeugs aus der Sicht des Fahrers tatsächlich nicht einsehbar ist. Durch die erfindungsgemäße Fernbedienung wird also der Fahrer beim Überwachen eines autonomen Parkvorgangs des Kraftfahrzeugs zuverlässig unterstützt.

Ein erfindungsgemäßes Verfahren ist zum Unterstützen eines Fahrers beim Überwachen eines autonomen Parkvorgangs eines Kraftfahrzeugs ausgelegt. Der Parkvorgang wird durch eine Steuereinrichtung einer Fahrerassistenzeinrichtung unter Ausgabe von Steuersignalen an eine Antriebs- oder Lenkvorrichtung des Kraftfahrzeugs durchgeführt. Es werden Bilddaten über einen Umgebungsbereich des Kraftfahrzeugs mittels zumindest einer Kamera erfasst. Es werden Signale mit den durch die Kamera erfassten Bilddaten und/oder daraus berechneten Bilddaten von der Steuereinrichtung an eine Fernbedienung gesendet. Mittels einer Anzeigeeinrichtung der Fernbedienung werden Bilder angezeigt, die auf den Bilddaten beruhen.

Bei dem Verfahren befinden sich der Nutzer des Kraftfahrzeugs und die Fernbedienung vorzugsweise außerhalb des Kraftfahrzeugs. Das Kraftfahrzeug wird autonom bzw. automatisch mittels der Fahrerassistenzeinrichtung geparkt, und der Parkvorgang wird durch den Nutzer extern beobachtet. Der Nutzer befindet sich also bevorzugt in einer solchen Position relativ zum Kraftfahrzeug, dass er das Kraftfahrzeug während des Parkvorgangs selbst sehen kann und den Parkvorgang jederzeit mittels der Fernbedienung unterbrechen kann. Hier bekommt der Nutzer eine wertvolle Hilfe, indem zum Beispiel Kamerabilder eines solchen Umgebungsbereichs des Kraftfahrzeugs an der Fernbedienung angezeigt werden, der durch den Nutzer aufgrund der Position des Kraftfahrzeugs nicht einsehbar ist.

Die mit Bezug auf die erfindungsgemäße Fahrerassistenzeinrichtung vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Insbesondere können somit Merkmale oder Merkmalskombinationen von erläuterten Ausführungsbeispielen miteinander kombiniert werden und dadurch neue Ausführungsbeispiele generiert werden, welche ebenfalls von der Offenbarung mit umfasst sind.

Ausführungsbeispiele der Erfindung werden nachfolgend anhand schematischer Zeichnungen näher erläutert. Es zeigen:
- Fig. 1: in schematischer Darstellung ein Kraftfahrzeug mit einer Fahrerassistenzeinrichtung gemäß einer Ausführungsform der Erfindung;
- Fig. 2: in schematischer Darstellung eine Parksituation, in welcher die Fahrerassistenzeinrichtung einen autonomen Parkvorgang durchführt, wobei durch Kameras der Fahrerassistenzeinrichtung gewonnene Bilddaten an eine Fernbedienung übertragen werden;

- Fig. 3: durch eine Anzeigeeinrichtung der Fernbedienung angezeigte Bilder, die auf den empfangenen Bilddaten beruhen; und
- Fig. 4: durch die Anzeigeeinrichtung der Fernbedienung angezeigte Bilder, die auf aus den Bilddaten verarbeiteten Daten beruhen, wobei die Bilder eine Darstellung einer Draufsicht auf das Kraftfahrzeug und seine Umgebung beinhalten.

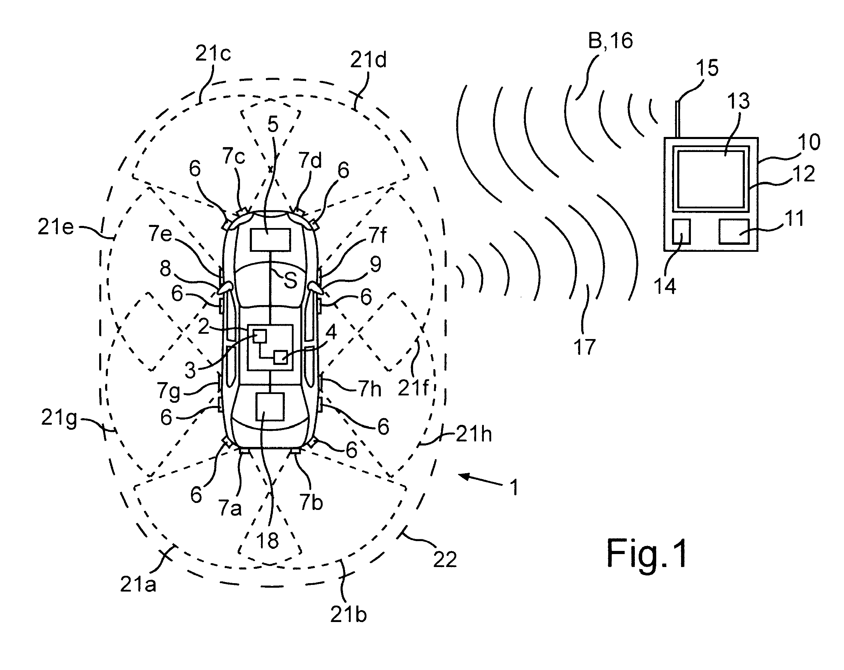

Ein in Fig. 1 dargestelltes und als Personenkraftwagen 1 ausgebildetes Kraftfahrzeug umfasst eine Fahrerassistenzeinrichtung, die zum Durchführen eines autonomen bzw. vollständig automatischen Parkvorgangs des Personenkraftwagens 1 ausgebildet ist und somit ein Parkhilfesystem ist. Die Fahrerassistenzeinrichtung umfasst eine Steuereinrichtung 2, die einen Mikroprozessor 3 sowie einen Sender 4 aufweist.

Die Steuereinrichtung 2 ist mit einer in Fig. 1 lediglich schematisch dargestellten Antriebs- und Lenkvorrichtung 5 des Personenkraftwagens 1 elektrisch gekoppelt. Die Antriebs- und Lenkvorrichtung 5 umfasst alle zum Durchführen eines Parkvorgangs erforderlichen Einrichtungen des Personenkraftwagens 1, wie insbesondere einen Antriebsstrang, eine Bremsanlage und eine Lenkeinrichtung. Die Steuereinrichtung 2 kann Steuersignale S an die Antriebs- und Lenkvorrichtung 5 ausgeben, die das Durchführen des autonomen Parkvorgangs veranlassen.

Die Fahrerassistenzeinrichtung umfasst außerdem Sensoren 6, die um den Umfang des Personenkraftwagens 1 an seiner Außenhaut verteilt angeordnet sind; und zwar sind die Sensoren 6 so angeordnet, dass Parklücken problemlos erkannt und erfasst werden können. Ein Sensor 6 ist im Bereich einer vorderen linken Ecke des Personenkraftwagens 1 angebracht, ein Sensor 6 im Bereich einer vorderen rechten Ecke, jeweils ein Sensor 6 im jeweiligen Bereich eines linken und eines rechten Außenspiegels 8, 9, jeweils ein Sensor 6 im jeweiligen Bereich der beiden C-Säulen, ein Sensor 6 im Bereich einer hinteren linken Ecke des Personenkraftwagens 1 sowie ein Sensor 6 im Bereich einer hinteren rechten Ecke des Personenkraftwagens 1. Die Anordnung sowie die Anzahl der Sensoren 6 sind in Fig. 1 lediglich beispielhaft dargestellt. Die Sensoren 6 können Ultraschallsensoren und/oder optische Sensoren und/oder Radargeräte sein.

Außer den Sensoren 6 umfasst die Fahrerassistenzeinrichtung eine Mehrzahl von Kameras 7a bis 7h, die zum Detektieren von Licht in einem durch den Menschen wahrnehmbaren bzw. sichtbaren Spektralbereich ausgebildet sind. Eine Kamera 7a ist in einem linken Bereich eines hinteren Stoßfängers angeordnet, eine Kamera 7b ist in einem rechten Bereich des hinteren Stoßfängers angeordnet, eine Kamera 7c ist in einem linken Bereich eines vorderen Stoßfängers angeordnet, eine Kamera 7d ist ein einem rechten Bereich des vorderen Stoßfängers angeordnet, eine Kamera 7e ist im Bereich des linken Außenspiegels 8 angeordnet, eine Kamera 7f ist im Bereich des rechten Außenspiegels 9 angeordnet, eine Kamera 7g ist im Bereich der linken C-Säule angeordnet, und eine Kamera 7h ist im Bereich der rechten C-Säule des Personenkraftwagens 1 angeordnet. Die Kameras 7a bis 7h erfassen jeweils einen Umgebungsbereich 21 a bis 21 h des Personenkraftwagens 1, insgesamt wird durch die Kameras 7a bis 7h eine gesamte Umgebung bzw. ein Gesamtumgebungsbereich 22 des Personenkraftwagens 1 erfasst, das heißt es wird durch die Kameras 7a bis 7h ein 360°-Bild der Umgebung 22 des Personenkraftwagens 1 gewonnen. Dabei können sich die Erfassungsbereiche 21 a bis 21 h der einzelnen benachbarten Kameras 7a bis 7h überlappen. Die Anordnung und die Anzahl der Kameras 7a bis 7h sind in Fig. 1 lediglich beispielhaft dargestellt. Es kann zum Beispiel vorgesehen sein, dass an dem hinteren und dem vorderen Stoßfänger jeweils lediglich eine Kamera 7a bzw. 7c zentral angebracht ist. Gleichfalls kann vorgesehen sein, dass jeweils drei Kameras oder jeweils lediglich eine Kamera 7e, 7g bzw. 7f, 7h seitlich am Personenkraftwagen 1 angebracht sind/ist.

Die Kameras 7a bis 7h sind mit der Steuereinrichtung 2 elektrisch gekoppelt. Die durch die Kameras 7a bis 7h gewonnen Bilddaten werden an den Mikroprozessor 3 übermittelt. Also empfängt der Mikroprozessor 3 alle Bilddaten, die durch die Kameras 7a bis 7h aufgezeichnet werden. Der Mikroprozessor 3 empfängt somit Daten, die ein Bild über die gesamte 360°-Umgebung 22 des Personenkraftwagens 1 beinhalten.

Zur Fahrerassistenzeinrichtung gehört auch eine Fernbedienung 10, die ein Bedienelement 11, zum Beispiel einen Knopf, sowie eine Anzeigeeinrichtung 12 umfasst. Die Anzeigeeinrichtung 12 umfasst einen Bildschirm 13. Die Fernbedienung 10 umfasst außerdem eine Sende- und Empfangseinrichtung 14, die zum Senden und zum Empfangen von Signalen ausgebildet ist. Der Sende- und Empfangseinrichtung 14 ist eine Antenne 15 zugeordnet, die zum Abstrahlen und zum Empfangen der Signale dient. Wir bereits ausgeführt, kann die Steuereinrichtung 2, und genauer gesagt der Mikroprozessor 3, einen autonomen bzw. vollständig automatischen Parkvorgang des Personenkraftwagens 1 durchführen. Nach Erkennen einer Parklücke, nämlich mit Hilfe der Sensoren 6, berechnet der Mikroprozessor 3 eine Parkbahn, die der Personenkraftwagen 1 zum Erreichen der Parklücke befahren muss. Nach Berechnen der Parkbahn kann dann der tatsächliche Parkvorgang gestartet werden. Diesen Parkvorgang kann ein Fahrer des Personenkraftwagens 1 einleiten, nämlich mit Hilfe des Bedienelements 11 der Fernbedienung 10. Durch Betätigen des Bedienelements 11 wird der autonome Parkvorgang des Personenkraftwagens 1 gestartet. Ebenfalls dient das Bedienelement 11 zum Unterbrechen eines bereits begonnen Parkvorgangs. Dies kann zum Beispiel so aussehen, dass der selbsttätige Parkvorgang nur dann aufrechterhalten bleibt, solange der Fahrer das Bedienelement 11 betätigt hält. Wird das Bedienelement 11 freigegeben, so wird dar Parkvorgang sofort unterbrochen und der Personenkraftwagen 1 gestoppt.

Also kann mit dem Bedienelement 11 ein Unterbrechungsbefehl B erzeugt werden. Die Sende- und Empfangseinrichtung 14 sendet dann Signale 16 mit dem Unterbrechungsbefehl B an die Steuereinrichtung 2 des Personenkraftwagens 1, nämlich an einen Empfänger des Personenkraftwagens 1. Dieser Empfänger kann zum Beispiel in den Sender 4 integriert sein. Nach Empfangen des Unterbrechungsbefehls B unterbricht der Mikroprozessor 3 sofort den Parkvorgang.

Signale 17 mit den von den Kameras 7a bis 7h gewonnenen Bilddaten und/oder daraus berechneten Bilddaten werden im Ausführungsbeispiel durch den Sender 4 an die Fernbedienung 10 gesendet. Diese Signale 17 empfängt die Sende- und Empfangseinrichtung 14, die auch die Bilddaten aus den Signalen 17 extrahiert. Die Sende- und Empfangseinrichtung 14 übermittelt die Bilddaten an die Anzeigeeinrichtung 12, die an dem Bildschirm 13 Bilder anzeigt, die auf den Bilddaten beruhen.

Die von der Steuereinrichtung 2 an die Fernbedienung 10 übermittelten Bilddaten können die durch eine Kamera 7a bis 7h oder durch mehrere Kameras 7a bis 7h gewonnenen Bilddaten und/oder aus Bilddaten einer Kamera 7a bis 7h oder mehrerer Kameras 7a bis 7h berechnete bzw. abgeleitete Bilddaten sein. Also können Bilddaten einer beliebigen Kombination aus den Kameras 7a bis 7h und/oder aus diesen Bilddaten berechnete Bilddaten an die Fernbedienung 10 übermittelt werden. Zum Beispiel können solche Bilddaten an die Fernbedienung 10 übermittelt werden, die ein gesamtes 360°-Bild der gesamten Umgebung 22 des Personenkraftwagens 1 beinhalten. In diesem Fall werden die Bilddaten aller Kameras 7a bis 7h zusammengefasst und an die Fernbedienung 10 übermittelt; selbstverständlich werden hier die Bilddaten betreffend die Überlappungsbereiche - soweit sie gegeben sind - an die Fernbedienung 10 lediglich einmal übermittelt, so dass an der Fernbedienung 10 ein Gesamtbild ohne Überlappung entsteht. Es kann auch vorgesehen sein, dass die Steuereinrichtung 2 solche Bilddaten an die Fernbedienung 10 übermittelt, die lediglich einen ausgewählten Bereich der gesamten Umgebung, insbesondere einen der Erfassungsbereiche 21 a bis 21 h, des Personenkraftwagens 1 abbilden.

Die Fahrerassistenzeinrichtung umfasst ferner eine Erfassungseinrichtung 18, mit welcher die jeweils augenblickliche Position der Fernbedienung 10 und somit des die Fernbedienung 10 haltenden Fahrers bezüglich des Personenkraftwagens 1 erfasst werden kann. Die Erfassungseinrichtung 18 kann zum Beispiel ein Teil eines Funkortungssystems des Personenkraftwagens 1 sein. Die Erfassungseinrichtung 18 übermittelt Daten an die Steuereinrichtung 2, die Informationen über die jeweils momentane Position der Fernbedienung 10 relativ zum Personenkraftwagen 1 beinhalten. Abhängig von der jeweils aktuellen Position der Fernbedienung 10 kann die Steuereinrichtung 2 einen Bereich der gesamten Umgebung des Personenkraftwagens 1 auswählen und Bilddaten über diesen ausgewählten Bereich an die Fernbedienung 10 übertragen.

Also kann die Steuereinrichtung 2 abhängig von der jeweils augenblicklichen Position der Fernbedienung 10 relativ zum Personenkraftwagen 1 solche Bilddaten an die Fernbedienung 10 übermitteln, die ein Bild über einen ausgewählten Bereich der Umgebung 22, insbesondere einen der Erfassungsbereiche 21 a bis 21 h, des Personenkraftwagens 1 beinhalten. Es kann auch das gesamte 360°-Bild der Umgebung 22 des Personenkraftwagens 1 in mehrere Teile unterteilt werden, und Bilddaten betreffend jeweils einen Anteil des gesamten 360°-Bilds können abwechselnd an die Fernbedienung 10 übermittelt werden. Insbesondere können Bilddaten betreffend die Erfassungsbereiche 21 a bis 21 h an die Fernbedienung 10 abwechselnd übermittelt werden. Dann bekommt der Fahrer abwechselnd unterschiedliche Erfassungsbereiche 21 a bis 21 h der gesamten Umgebung 22 des Personenkraftwagens 1 am Bildschirm 13 angezeigt. Die Frequenz des Wechselns der am Bildschirm 13 angezeigten Erfassungsbereiche 21 a bis 21 h der gesamten Umgebung 22 des Personenkraftwagens 1 beträgt im Ausführungsbeispiel 1 Hz. Dann wechselt das am Bildschirm 13 angezeigte Bild in zeitlichen Abständen von 1 s. Der Fahrer kann sich somit über die gesamte 360°-Umgebung 22 des Personenkraftwagens 1 informieren.

Es kann auch vorgesehen sein, dass die Steuereinrichtung 2 solche Bilddaten an die Fernbedienung 10 übermittelt, die ein Bild über einen für den Fahrer nicht einsehbaren Bereich der Umgebung 22 des Personenkraftwagens 1 beinhalten. Am Bildschirm 13 kann also ein solcher Bereich, insbesondere einer der Erfassungsbereiche 21 a bis 21 h, abgebildet werden, der von der Fernbedienung 10 bzw. vom Fahrer abgewandt ist. Gegenstände, die sich auf der dem Fahrer gegenüber liegenden Seite des Personenkraftwagens 1 befinden, können durch den Fahrer problemlos erkannt werden, und der Fahrer kann gegebenenfalls den automatischen Parkvorgang unterbrechen, nämlich mit Hilfe des Bedienelements 11.

Ganz allgemein wird vorliegend zwischen zwei Aspekten betreffend die Bilddaten unterschieden. Zum einen können Bilddaten betreffend unterschiedliche Bereiche, insbesondere unterschiedliche Erfassungsbereiche 21 a bis 21 h, der gesamten Umgebung 22 des Personenkraftwagens 1 an die Fernbedienung 10 übermittelt werden, nämlich beispielsweise abhängig von der aktuellen Position der Fernbedienung 10 und/oder abwechselnd. Zum anderen können an die Fernbedienung 10 direkt die durch die Kameras 7a bis 7h gewonnen und nicht weiter verarbeiteten Bilddaten und/oder daraus berechnete Bilddaten übermittelt werden. Die Berechnung bzw. Verarbeitung der durch zumindest eine Kamera 7a bis 7h gewonnen Bilddaten kann zum Beispiel derart erfolgen, dass eine Darstellung einer Draufsicht auf den Personenkraftwagen 1 und zumindest einen Bereich der gesamten Umgebung 22 des Personenkraftwagens 1 erzeugt und am Bildschirm 13 angezeigt wird. Eine derartige Vogelperspektive hat den Vorteil, dass der Fahrer die jeweiligen Abstände zwischen dem Personenkraftwagen 1 und jeglichen Gegenständen besser beurteilen kann.

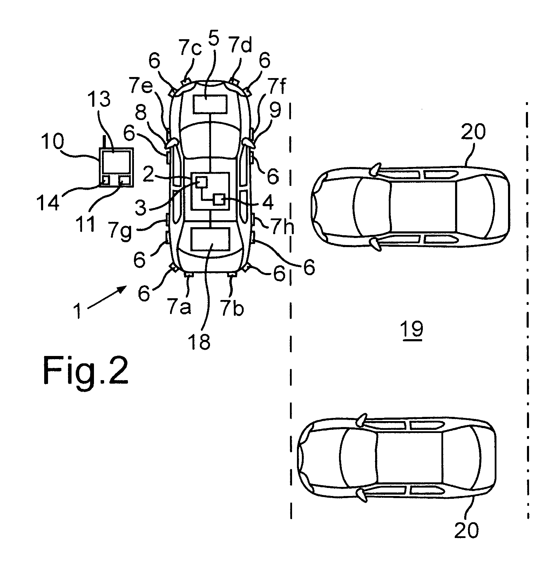

Bezug nehmend auf die Figuren 2 bis 4 wird nun ein Verfahren gemäß einer Ausführungsform der Erfindung näher erläutert. Fig. 2 zeigt eine Situation, in welcher ein autonomer Parkvorgang des Personenkraftwagens 1 durchgeführt wird. Die Fahrerassistenzeinrichtung erkennt eine Parklücke 19, die im Ausführungsbeispiel eine Querparklücke ist. Die Parklücke 19 erkennt die Steuereinrichtung 2 mit Hilfe der Sensoren 6. Der Personenkraftwagen 1 steht nun in der in Fig. 2 gezeigten Position still. Der Mikroprozessor 3 berechnet eine Parkbahn, die durch den Personenkraftwagen 1 befahren werden soll, um die Parklücke 19 zu erreichen. In einer Endposition soll der Personenkraftwagen 1 parallel zu zwei die Parklücke 19 begrenzenden Kraftfahrzeugen 20 angeordnet sein. Der Fahrer - die Fernbedienung 10 tragend - steigt aus dem Personenkraftwagen 1 aus. Neben dem Personenkraftwagen 1 stehend - nämlich auf der linken Seite des Personenkraftwagens 1 - betätigt der Fahrer das Bedienelement 11, und der vollständig automatische Parkvorgang wird eingeleitet. Der Personenkraftwagen 1 fährt nun mit Schrittgeschwindigkeit in die Parklücke 19 ein. Während dieses Parkvorgangs übermittelt die Steuereinrichtung 2 Bilddaten an die Fernbedienung 10, die durch die Kameras 7a bis 7h gewonnen werden. Gleichzeitig ermittelt die Erfassungseinrichtung 18 die Position der Fernbedienung 10 relativ zum Personenkraftwagen 1. Die Steuereinrichtung 2 erkennt nun, dass sich die Fernbedienung 10 und somit auch der Fahrer seitlich des Personenkraftwagens 1 befindet, nämlich auf der linken Seite. Die linke Seite des Personenkraftwagens 1 ist somit für den Fahrer einsehbar; es ist nicht erforderlich, Bilddaten über den linken Bereich des Personenkraftwagens 1 an die Fernbedienung 10 zu übermitteln.

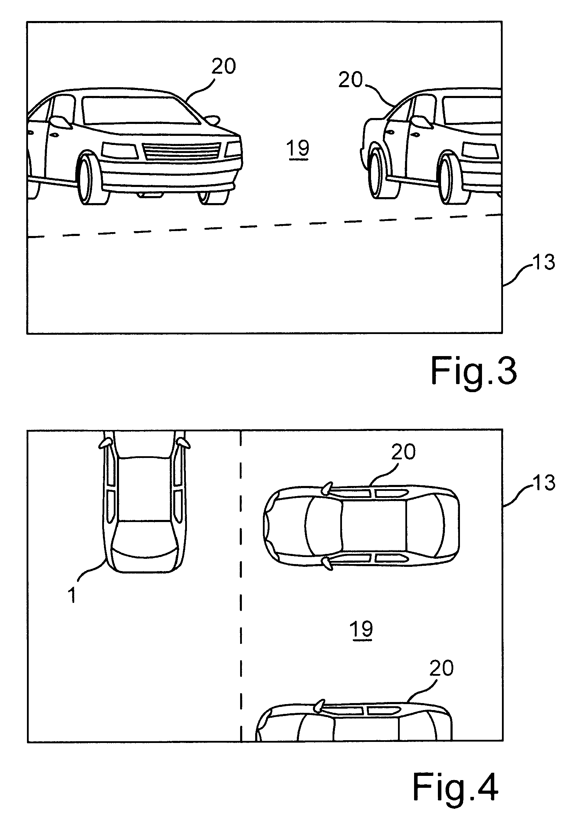

Fig. 2 zeigt eine beispielhafte Anzeige, die am Bildschirm 13 der Fernbedienung 10 während des Parkvorgangs des Personenkraftwagens 1 gemäß Fig. 2 erzeugt wird. Gemäß Fig. 3 werden an die Fernbedienung 10 lediglich Bilddaten der im Bereich der rechten C-Säule angeordneten Kamera 7h übermittelt, wie auch Bilddaten der im rechten Bereich des hinteren Stoßfängers angeordneten Kamera 7b. Der Fahrer bekommt also an dem Bildschirm 13 Bilder eines seitlich-hinteren Bereichs 21 b, 21 h der Umgebung 22 des Personenkraftwagens 1 angezeigt, nämlich aus der Sicht des Personenkraftwagens 1. Im Ausführungsbeispiel gemäß Fig. 3 werden also die von den Kameras 7b, 7h gewonnenen Bilddaten direkt bzw. ohne Verarbeitung an die Fernbedienung 10 übermittelt.

Fig. 4 zeigt eine weitere beispielhafte Anzeige, die am Bildschirm 13 der Fernbedienung 10 während des Parkvorgangs gemäß Fig. 2 erzeugt wird. Die Steuereinrichtung 2 berechnet hier aus den durch die Kameras 7a, 7b, 7g, 7h gewonnenen Bilddaten solche Bilddaten, die eine Darstellung einer Draufsicht auf den Personenkraftwagen 1 sowie einen seitlich-hinteren Bereich umfassend die Parklücke 19 beinhalten. Diese Bilddaten übermittelt die Steuereinrichtung 2 an die Fernbedienung 10, und die Anzeigeeinrichtung 12 der Fernbedienung 10 zeigt Bilder, die auf den berechneten Bilddaten beruhen. Der Fahrer bekommt also Bilder angezeigt, die den Personenkraftwagen 1 und seine Umgebung aus einer Vogelperspektive darstellen.

Insgesamt wird also eine Fahrerassistenzeinrichtung bereitgestellt, mit welcher der Fahrer eines Kraftfahrzeugs 1 beim Überwachen eines autonomen Parkvorgangs des Kraftfahrzeugs 1 unterstützt wird. Der Fahrer kann eine Gefahrsituation während des vollständig automatischen Parkvorgangs des Kraftfahrzeugs 1 besonders einfach erkennen und den Parkvorgang mittels einer Fernbedienung 10 jederzeit unterbrechen. Kameras 7a bis 7h gewinnen Bilddaten über einen Umgebungsbereich 21 a bis 21 h des Personenkraftwagens 1, nämlich während des Parkvorgangs. Eine Steuereinrichtung 2 übermittelt die Bilddaten an die Fernbedienung 10, die dem Fahrer Bilder anzeigt, die auf den gewonnenen Bilddaten beruhen.

## Patentansprüche

1. Fahrerassistenzeinrichtung für ein Kraftfahrzeug (1), mit einer Steuereinrichtung (2), die dazu ausgelegt ist, Steuersignale (S) an eine Antriebs- und/oder Lenkvorrichtung (5) des Kraftfahrzeugs (1) auszugeben, die ein Durchführen eines autonomen Parkvorgangs veranlassen, und Befehle (B) von einer Fernbedienung (10) zu empfangen und nach Empfangen eines vorbestimmten Unterbrechungsbefehls (B) einen bereits begonnenen Parkvorgang des Kraftfahrzeugs (1) zu unterbrechen,
**gekennzeichnet durch**
zumindest eine mit der Steuereinrichtung (2) gekoppelte Kamera (7a bis 7h) zum Gewinnen von Bilddaten über einen Umgebungsbereich (21 a bis 21 h) des Kraftfahrzeugs (1), wobei die Steuereinrichtung (2) dazu ausgelegt ist, Signale (17) an die Fernbedienung (10) zu senden, die die **durch** die zumindest eine Kamera (7a bis 7h) gewonnenen Bilddaten und/oder daraus berechnete Bilddaten umfassen.

2. Fahrerassistenzeinrichtung nach Anspruch 1,
**gekennzeichnet durch**
eine Fernbedienung (10), die umfasst:
- ein Bedienelement (11) zum Erzeugen des Unterbrechungsbefehls (B) und
- eine Anzeigeeinrichtung (12), die dazu ausgebildet ist, Bilddaten von der Steuereinrichtung (2) zu empfangen und Bilder anzuzeigen, die auf den Bilddaten beruhen.

3. Fahrerassistenzeinrichtung nach Anspruch 1 oder 2,
**gekennzeichnet durch**
- zumindest zwei mit der Steuereinrichtung (2) gekoppelte Kameras (7a bis 7h) jeweils zum Gewinnen von Bilddaten über einen Umgebungsbereich (21 a bis 21 h) des Kraftfahrzeugs (1) und
- eine Erfassungseinrichtung (18) zum Ermitteln einer Position der Fernbedienung (10) relativ zum Kraftfahrzeug (1),
wobei die Steuereinrichtung (2) dazu ausgelegt ist, abhängig von der jeweils aktuellen Position der Fernbedienung (10) relativ zum Kraftfahrzeug (1) zumindest einen Bereich (21 a bis 21 h) aus einem von den zumindest zwei Kameras (7a bis 7h) erfassbaren Gesamtumgebungsbereich (22) auszuwählen und Signale (17) an die Fernbedienung (10) zu senden, die Bilddaten über den ausgewählten Bereich (21 a bis 21 h) umfassen.

4. Fahrerassistenzeinrichtung nach Anspruch 3,
**dadurch gekennzeichnet, dass**
die Steuereinrichtung (2) dazu ausgelegt ist, einen solchen Bereich (21 a bis 21 h) aus dem von den zumindest zwei Kameras (7a bis 7h) erfassbaren Gesamtumgebungsbereich (22) des Kraftfahrzeugs (1) auszuwählen, der von der Fernbedienung (10) abgewandt ist.

5. Fahrerassistenzeinrichtung nach einem der vorhergehenden Ansprüche,
**dadurch gekennzeichnet, dass**
die Steuereinrichtung (2) dazu ausgelegt ist, die von der zumindest einen Kamera (7a bis 7h), insbesondere die von zumindest zwei Kameras (7a bis 7h), gewonnenen Bilddaten zu verarbeiten und Signale (17) mit den verarbeiteten Bilddaten an die Fernbedienung (10) zu senden, wobei bevorzugt die Steuereinrichtung (2) dazu ausgelegt ist, durch Verarbeitung der Bilddaten solche Bilddaten für die Fernbedienung (10) zu berechnen, die eine Darstellung einer Draufsicht auf das Kraftfahrzeug (1) und zumindest einen Umgebungsbereich (21 a bis 21 h) des Kraftfahrzeugs (1) beinhalten.

6. Fahrerassistenzeinrichtung nach einem der vorhergehenden Ansprüche,
**dadurch gekennzeichnet, dass**
die Fahrerassistenzeinrichtung (2) zumindest zwei Kameras (7a bis 7h) jeweils zum Gewinnen von Bilddaten über einen Umgebungsbereich (21 a bis 21 h) des Kraftfahrzeugs (1) aufweist und die Steuereinrichtung (2) dazu ausgelegt ist, abwechselnd die Bilddaten der zumindest zwei Kameras (7a bis 7h) an die Fernbedienung (10) zu übertragen.

7. Fahrerassistenzeinrichtung nach einem der vorhergehenden Ansprüche,
**dadurch gekennzeichnet, dass**
die Fahrerassistenzeinrichtung (2) zumindest zwei Kameras (7a bis 7h) jeweils zum Gewinnen von Bilddaten über einen Umgebungsbereich (21 a bis 21 h) des Kraftfahrzeugs (1) aufweist und die Steuereinrichtung (2) dazu ausgelegt ist, eine Eingabe von der Fernbedienung (10) zu empfangen, über welche eine Kamera (7a bis 7h) aus den zumindest zwei Kameras (7a bis 7h) ausgewählt wird, und Bilddaten der ausgewählten Kamera (7a bis 7h) an die Fernbedienung (10) zu übertragen.

8. Fahrerassistenzeinrichtung nach einem der vorhergehenden Ansprüche,
**dadurch gekennzeichnet, dass**
die Steuereinrichtung (2) dazu ausgebildet ist, die Signale (17) an die Fernbedienung (10) gemäß einem Standard der IEEE-802.11-Familie und/oder einem Standard der IEEE-802.15-Familie und/oder gemäß einem Mobilfunk-Standard zu erzeugen.

9. Kraftfahrzeug (1) mit einer Fahrerassistenzeinrichtung nach einem der vorhergehenden Ansprüche.

10. Kraftfahrzeug (1) nach Anspruch 9,
**dadurch gekennzeichnet, dass**
jeweils zumindest eine Kamera (7a bis 7d) in einem Frontbereich, in einem Heckbereich und jeweils zumindest eine Kamera (7e bis 7h) seitlich an dem Kraftfahrzeug (1) angeordnet ist.

11. Kraftfahrzeug (1) nach Anspruch 9 oder 10,
**dadurch gekennzeichnet, dass**
die Fernbedienung (10) in einen Fahrzeugschlüssel des Kraftfahrzeugs (1) integriert ist und die Steuereinrichtung (2) dazu ausgelegt ist, die Signale (17) an die Fernbedienung (10) gemäß demselben Kommunikationsstandard zu senden, gemäß welchem Codes zwischen dem Kraftfahrzeug (1) und dem Fahrzeugschlüssel übertragen werden.

12. Fernbedienung (10) für eine Fahrerassistenzeinrichtung mit:
- einer Sende- und Empfangseinrichtung (14) zum Senden und Empfangen von Signalen (16, 17),
- einem Bedienelement (11), mittels welchem ein Unterbrechungsbefehl (B) an eine Steuereinrichtung (2) der Fahrerassistenzeinrichtung erzeugbar ist, welcher ein Unterbrechen eines autonomen Parkvorgangs eines die Fahrerassistenzeinrichtung aufweisenden Kraftfahrzeugs (1) bewirkt, wobei die Sende- und Empfangseinrichtung (14) dazu ausgelegt ist, Signale (16) mit dem Unterbrechungsbefehl (B) an die Steuereinrichtung (2) der Fahrerassistenzeinrichtung zu senden, und
- einer Anzeigeeinrichtung (12), die dazu ausgebildet ist, mittels einer Kamera (7a bis 7h) erzeugte Bilddaten von der Steuereinrichtung (2) der Fahrerassistenzeinrichtung zu empfangen und Bilder anzuzeigen, die auf den Bilddaten beruhen.

13. Fernbedienung (10) nach Anspruch 12,
**dadurch gekennzeichnet, dass**
die Sende- und Empfangseinrichtung (14) dazu ausgebildet ist, Signale (17) gemäß einem Standard der IEEE-802.11-Familie und/oder einem Standard der IEEE-802.15-Familie und/oder gemäß einem Mobilfunk-Standard zu erzeugen und zu empfangen.

14. Verfahren zum Unterstützen eines Fahrers beim Überwachen eines autonomen Parkvorgangs eines Kraftfahrzeugs (1), welcher durch eine Steuereinrichtung (2) einer Fahrerassistenzeinrichtung unter Ausgabe von Steuersignalen (S) an eine Antriebs- und/oder Lenkvorrichtung (5) des Kraftfahrzeugs (1) durchgeführt wird, mit den Schritten:
- Erfassen von Bilddaten über einen Umgebungsbereich des Kraftfahrzeugs (1) während des Parkvorgangs mittels zumindest einer Kamera (7a bis 7h),
- Senden von Signalen (17) mit den Bilddaten und/oder daraus berechneten Bilddaten von der Steuereinrichtung (2) an eine Fernbedienung (10), und
- Anzeigen von Bildern mittels einer Anzeigeeinrichtung (12) der Fernbedienung (10), die auf den Bilddaten beruhen.

15. Verfahren nach Anspruch 14,
**dadurch gekennzeichnet, dass**
- zumindest zwei mit der Steuereinrichtung (2) gekoppelte Kameras (7a bis 7h) jeweils Bilddaten über einen Umgebungsbereich (21 a bis 21 h) des Kraftfahrzeugs (1) gewinnen und
- eine Erfassungseinrichtung (18) eine Position der Fernbedienung (10) relativ zum Kraftfahrzeug (1) ermittelt,
wobei die Steuereinrichtung (2) abhängig von der jeweils aktuellen Position der Fernbedienung (10) relativ zum Kraftfahrzeug (1) zumindest einen Bereich (21 a bis 21 h) aus einem von den zumindest zwei Kameras (7a bis 7h) erfassten Gesamtumgebungsbereich (22) auswählt und Signale (17) an die Fernbedienung (10) sendet, die Bilddaten über den ausgewählten Bereich (21 a bis 21 h) umfassen.

16. Verfahren nach Anspruch 15,
**dadurch gekennzeichnet, dass**
die Steuereinrichtung (2) einen solchen Bereich (21 a bis 21h) aus dem von den zumindest zwei Kameras (7a bis 7h) erfassten Gesamtumgebungsbereich (22) des Kraftfahrzeugs (1) auswählt, der von der Fernbedienung (10) abgewandt ist.

17. Verfahren nach einem der Ansprüche 14 bis 16,
**dadurch gekennzeichnet, dass**
von den zumindest zwei Kameras (7a bis 7h) gewonnene Bilddaten mittels der Steuereinrichtung (2) miteinander verarbeitet werden und Signale (17) mit den verarbeiteten Bilddaten von der Steuereinrichtung (2) an die Fernbedienung (10) gesendet werden, wobei bevorzugt die Steuereinrichtung (2) durch Verarbeitung der Bilddaten solche Bilddaten für die Fernbedienung (10) berechnet, die eine Darstellung einer Draufsicht auf das Kraftfahrzeug (1) und zumindest einen Bereich (21 a bis 21 h) des Gesamtumgebungsbereichs (22) beinhalten.
